# EUROPÄISCHE PATENTSCHRIFT

(11) **EP 0 351 360 B1**
(45) Veröffentlichungstag und Bekanntmachung des Hinweises auf die Patenterteilung: **22.02.1995**
(21) Anmeldenummer: 89810479.9
(22) Anmeldetag: 21.06.1989
(51) Int. Cl.: C08F 2/44, C08F 10/00, C08K 5/00

(54) **Verfahren zur Herstellung von thermisch stabilen Olefinpolymeren**
Process for preparing thermally stabilized polyolefins
Procédé de préparation des polyoléfines thermiquement stabilisées

(30) Priorität: 30.06.1988 CH 2501/88
(43) Veröffentlichungstag der Anmeldung: 17.01.1990
(73) Patentinhaber: CIBA-GEIGY AG, 4002 Basel (CH)
(72) Erfinder: Mülhaupt, Rolf, Dr., CH-1723 Marly (CH); Dubs, Paul, Dr., CH-1723 Marly (CH)

(56) Entgegenhaltungen:
- EP-A- 0 192 987
- EP-A- 0 254 348
- EP-A- 0 290 391
- EP-A- 0 350 444
- CHEMICAL ABSTRACTS, Band 105, Nr. 16, 20. Oktober 1986, Seite 11,Zusammenfassung Nr. 134505p, Columbus, Ohio, US;& JP-A-61 55 103

## Beschreibung

Die Erfindung betrifft ein Verfahren zur Herstellung von thermisch und oxidativ stabilen Olefinpolymeren durch Zusatz mehrerer Stabilisatoren zur Polymerisation. Die Erfindung betrifft auch die so hergestellten stabilisierten Olefinpolymeren.

Die Niederdruck-Polymerisation von Olefinen mittels metallorganischen Komplexkatalysatoren (z.B. Ziegler-Natta-Katalysatoren) führt üblicherweise zu einem feinpulverigen Polymerisat, das vor der formgebenden Verarbeitung in einem Extruder granuliert wird. Bei dieser Granulierung werden dem Polymeren Stabilisatoren und/oder sonstige Verarbeitungshilfsmittel zugesetzt.

Neuerdings ist es gelungen, durch Verwendung von festen Trägerkatalysatoren sphärische granulatartige Polymerisate herzustellen, die nicht mehr durch Extrusion granuliert werden müssen und direkt verarbeitet werden können. Als Träger für diese festen Katalysatoren haben sich vor allem sphärische Magnesiumhalogenide einer bestimmten Teilchengrösse bewährt, wie dies z.B. in der DE-A-2 641 960 beschrieben ist. Das wasserfreie Magnesiumhalogenid bildet mit TiCl₄ und Elektronendonatoren unlösliche Komplexe, die dann mit Aluminiumalkylen aktiviert werden. Die Stereospezifität und Aktivität wird durch Mitverwendung von Elektronendonatoren wie z.B. Carbonsäureestern oder Verbindungen mit Si-O-C-Bindungen verstärkt, wie dies z.B. in der EP-A-45 977 beschrieben ist.

Da die dabei erhaltenen Polymerisate nicht mehr granuliert werden, ergab sich der Wunsch, Stabilisatoren, die für die Verarbeitung wichtig sind, bereits bei der Polymerisation zuzusetzen. Die üblichen Verarbeitungsstabilisatoren sind Antioxidantien vom Typ der sterisch gehinderten Phenole. Deren Zusatz zur Olefinpolymerisation verursacht in vielen Fällen Störungen der Polymerisation sowie eine Verfärbung der Polymerisate. Es wurde neuerdings gefunden (EP-A-192 987), dass sterisch gehinderte Aminstabilisatoren vom Typ der Polyalkylpiperidine die Polymerisation nicht stören und das Polymerisat nicht wesentlich verfärben und eine gute thermisch-oxidative Stabilisierung bewirken.

Es wurde weiterhin vorgeschlagen (EP-A-254 348), organische Phosphite oder Phosphonite als Antioxidantien zuzusetzen.

Ueberraschend wurde nunmehr gefunden, dass sich die Wirkung dieser Piperidin-Stabilisatoren, insbesondere die Verarbeitungsstabilität, steigern lässt, wenn man als Costabilisatoren Phosphor-III-ester zusetzt, ohne das Katalysatorsystem zu beeinträchtigen. Bei Zusatz solcher Phosphorverbindungen ist auch ein Zusatz von Antioxidantien vom Typ der sterisch gehinderten Phenole möglich, ohne dass es zu Verfärbungen kommt. Durch einen solchen Zusatz kann die Lebensdauer der Phosphor-III-ester verlängert werden.

Die Erfindung betrifft daher ein Verfahren zur Herstellung von thermisch und oxidativ stabilen Olefinpolymeren durch Polymerisation an einem festen Katalysator, der durch Umsetzung eines Aluminiumalkyls mit einem festen Produkt aus einem Magnesiumdihalogenid in aktiver Form und einer Titanverbindung bereitet wurde, wobei die Polymerisation unter Zusatz mindestens einer 2,2,6,6,-Tetramethylpiperidinverbindung als Stabilisator durchgeführt wird, dadurch gekennzeichnet, dass man ausserdem mindestens einen Phosphor-III-ester als Costabilisator zur Polymerisation zusetzt.

Die bei diesem Verfahren polymerisierten Olefine sind Ethylen und α-Olefine, wie z.B. Propylen, 1-Buten, 4-Methylpenten-1 oder 5-Methyl-hexen-1, sowie Gemische von Olefinen wie z.B. Ethylen-Propylen oder Propylen im Gemisch mit kleineren Mengen höherer α-Olefine. Von besonderem Interesse ist das Verfahren für die Polymerisation und Copolymerisation von Propylen.

Die verwendeten Polymerisationskatalysatoren sind feste Katalysatoren. Sie bestehen aus einem wasserfreien Magnesiumdihalogenid in aktiver Form und einer Titanverbindung. Unter Magnesiumdihalogenid in aktiver Form ist ein solches zu verstehen, in dessen Röntgenspektrum die Linie der stärksten Reflexion verbreitert ist gegenüber der entsprechenden Linie im Spektrum des inaktiven Magnesiumhalogenids.

Vorzugsweise wird als Magnesiumhalogenid Magnesiumdichlorid oder Magnesiumdibromid verwendet. Die Titanverbindung enthält vorzugsweise mindestens eine Titan-Halogen-Bindung, besonders bevorzugt verwendet man Titantetrachlorid.

Die Titanverbindung kann in Kombination mit einem Elektronendonator verwendet werden, beispielsweise einem Carbonsäureester, wie dies in der EP-A-45 977 beschrieben ist.

Nach der Umsetzung der Magnesiumhalogenid-Komponente mit der Titanverbindung und gegebenenfalls mit dem Elektronendonator werden die überschüssige Titanverbindung und der überschüssige Elektronendonator zweckmässig mit einem inerten Lösungsmittel ausgewaschen, beispielsweise mit Hexan oder Heptan.

Der so bereitete Katalysator wird aktiviert durch Umsetzung mit einem Aluminiumalkyl, das vorzugsweise als Lösung in einem Alkan verwendet wird. Beispiele für geeignete Aluminiumalkyle sind Al(C₂H₅)₃ oder Al(C₄H₉)₃. Hierbei kann man als Coaktivator einen Elektronendonator zusetzen wie z.B. eine organische Siliziumverbindung, die mindestens eine Si-O-C-Bindung enthält, wie dies z.B. in der EP-A-45 977 beschrieben ist. Beispiele für solche Siliziumverbindungen sind Phenyltriethoxysilan, Phenyltrimethoxysilan, Diphenyldimethoxysilan, Methyltriethoxysilan, Dimethyldiethoxysilan oder Ethyltrimethoxysilan.

Die Polymerisation mit diesen Katalysatoren kann nach bekannten Methoden in flüssiger oder gasförmiger Phase durchgeführt werden. Die flüssige Phase kann z.B. ein aliphatischer Kohlenwasserstoff sein oder das flüssige Monomer selbst.

Die Stabilisatoren können vor der Polymerisation oder während der Polymerisation dem Polymerisationsmedium zugesetzt werden. Erfindungsgemäss werden mindestens zwei Stabilisatoren zugesetzt, nämlich eine 2,2,6,6-Tetramethylpiperidinverbindung und ein Phosphor-III-ester.

Die Piperidinverbindungen gehören zu den sterisch gehinderten Aminen, die vor allem als Lichtschutzmittel bekannt sind, hier aber in erster Linie als Antioxidantien wirken, d.h. dem Polymeren eine thermisch-oxidative Stabilität verleihen. Diese Verbindungen enthalten die Gruppe der Formel I 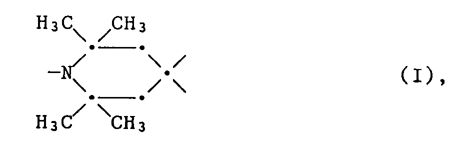
einmal oder mehrmal. Es können Verbindungen von relativ niedrigem Molekulargewicht (<700) oder von höherem Molekulargewicht sein. In letzterem Fall kann es sich auch um oligomere oder polymere Produkte handeln.

Von Bedeutung als Stabilisatoren sind insbesondere die folgenden Klassen von Tetramethylpiperidinverbindungen.
a) Verbindungen der Formel II 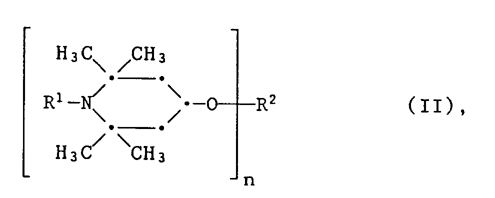 worin n eine Zahl von 1 bis 4, vorzugsweise 1 oder 2 bedeutet, R¹ Wasserstoff, Oxyl, C₁-C₁₂-Alkyl, C₃-C₈-Alkenyl, C₃-C₈-Alkinyl, C₇-C₁₂-Aralkyl, C₁-C₈-Alkanoyl, C₃-C₅-Alkenoyl, Glycidyl oder eine Gruppe -CH₂CH(OH)-Z, worin Z Wasserstoff, Methyl oder Phenyl ist, bedeutet, wobei R¹ vorzugsweise C₁-C₄-Alkyl, Allyl, Benzyl, Acetyl oder Acryloyl ist und R², wenn n 1 ist, Wasserstoff, gegebenenfalls durch ein oder mehrere Sauerstoffatome unterbrochenes C₁-C₁₈-Alkyl, Cyanethyl, Benzyl, Glycidyl, einen einwertigen Rest einer aliphatischen, cycloaliphatischen, araliphatischen, ungesättigten oder aromatischen Carbonsäure, Carbaminsäure oder Phosphor enthaltenden Säure oder einen einwertigen Silylrest, vorzugsweise einen Rest einer aliphatischen Carbonsäure mit 2 bis 18 C-Atomen, einer cycloaliphatischen Carbonsäure mit 7 bis 15 C-Atomen, einer α,β-ungesättigten Carbonsäure mit 3 bis 5 C-Atomen oder einer aromatischen Carbonsäure mit 7 bis 15 C-Atomen bedeutet, wenn n 2 ist, C₁-C₁₂-Alkylen, C₄-C₁₂-Alkenylen, Xylylen, einen zweiwertigen Rest einer aliphatischen, cycloaliphatischen, araliphatischen oder aromatischen Dicarbonsäure, Dicarbaminsäure oder Phosphor enthaltenden Säure oder einen zweiwertigen Silylrest, vorzugsweise einen Rest einer aliphatischen Dicarbonsäure mit 2 bis 36 C-Atomen, einer cycloaliphatischen oder aromatischen Dicarbonsäure mit 8 - 14 C-Atomen oder einer aliphatischen, cycloaliphatischen oder aromatischen Dicarbaminsäure mit 8 - 14 C-Atomen bedeutet, wenn n 3 ist, einen dreiwertigen Rest einer aliphatischen, cycloaliphatischen oder aromatischen Tricarbonsäure, einer aromatischen Tricarbaminsäure oder einer Phosphor enthaltenden Säure oder einen dreiwertigen Silylrest bedeutet und wenn n 4 ist, einen vierwertigen Rest einer aliphatischen, cycloaliphatischen oder aromatischen Tetracarbonsäure bedeutet.
   Bedeuten etwaige Substituenten C₁-C₁₂-Alkyl, so stellen sie z.B. Methyl, Ethyl, n-Propyl, n-Butyl, sek.-Butyl, tert.-Butyl, n-Hexyl, n-Octyl, 2-Ethyl-hexyl, n-Nonyl, n-Decyl, n-Undecyl oder n-Dodecyl dar.
   In der Bedeutung von C₁-C₁₈-Alkyl kann R² z.B. die oben angeführten Gruppen und dazu noch beispielsweise n-Tridecyl, n-Tetradecyl, n-Hexadecyl oder n-Octadecyl darstellen.
   Wenn R¹ C₃-C₈-Alkenyl bedeutet, so kann es sich z.B. um 1-Propenyl, Allyl, Methallyl, 2-Butenyl, 2-Pentenyl, 2-Hexenyl, 2-Octenyl, 4-tert.-Butyl-2-butenyl handeln.
   R¹ ist als C₃-C₈-Alkinyl bevorzugt Propargyl.
   Als C₇-C₁₂-Aralkyl ist R¹ insbesondere Phenethyl und vor allem Benzyl.
   R¹ ist als C₁-C₈-Alkanoyl beispielsweise Formyl, Propionyl, Butyryl, Octanoyl, aber bevorzugt Acetyl und als C₃-C₅-Alkenoyl insbesondere Acryloyl.
   Bedeutet R² einen einwertigen Rest einer Carbonsäure, so stellt es beispielsweise einen Essigsäure-, Capronsäure-, Stearinsäure-, Acrylsäure-, Methacrylsäure-, Benzoe- oder β-(3,5-Di-tert.-butyl-4-hydroxyphenyl)-propionsäurerest dar.
   Bedeutet R² einen zweiwertigen Rest einer Dicarbonsäure, so stellt es beispielsweise einen Malonsäure-, Bernsteinsäure-, Glutarsäure-, Adipinsäure-, Korksäure-, Sebacinsäure-, Maleinsäure-, Phthalsäure-, Dibutylmalonsäure-, Dibenzylmalonsäure-, Butyl-(3,5-di-tert.-butyl-4-hydroxybenzyl)-malonsäure- oder Bicycloheptendicarbonsäurerest dar.
   Stellt R² einen dreiwertigen Rest einer Tricarbonsäure dar, so bedeutet es z.B. einen Trimellitsäure- oder einen Nitrilotriessigsäurerest.
   Stellt R² einen vierwertigen Rest einer Tetracarbonsäure dar, so bedeutet es z.B. den vierwertigen Rest von Butan-1,2,3,4-tetracarbonsäure oder von Pyromellitsäure.
   Bedeutet R² einen zweiwertigen Rest einer Dicarbaminsäure, so stellt es beispielsweise einen Hexamethylendicarbaminsäure- oder einen 2,4-Toluylen-dicarbaminsäurerest dar.
   Beispiele für Polyalkylpiperidin-Verbindungen dieser Klasse sind folgende Verbindungen:
   1) 4-Hydroxy-2,2,6,6-tetramethylpiperidin
   2) 1-Allyl-4-hydroxy-2,2,6,6-tetramethylpiperidin
   3) 1-Benzyl-4-hydroxy-2,2,6,6-tetramethylpiperidin
   4) 1-(4-tert.-Butyl-2-butenyl)-4-hydroxy-2,2,6,6-tetramethylpiperidin
   5) 4-Stearoyloxy-2,2,6,6-tetramethylpiperidin
   6) 1-Ethyl-4-salicyloyloxy-2,2,6,6-tetramethylpiperidin
   7) 4-Methacryloyloxy-1,2,2,6,6-pentamethylpiperidin
   8) 1,2,2,6,6-Pentamethylpiperidin-4-yl-β-(3,5-di-tert.-butyl-4-hydroxyphenyl)-propionat
   9) Di-(1-benzyl-2,2,6,6-tetramethylpiperidin-4-yl)-maleinat
   10) Di-(2,2,6,6-tetramethylpiperidin-4-yl)-succinat
   11) Di-(2,2,6,6-tetramethylpiperidin-4-yl)-glutarat
   12) Di-(2,2,6,6-tetramethylpiperidin-4-yl)-adipat
   13) Di-(2,2,6,6-tetramethylpiperidin-4-yl)-sebacat
   14) Di-(1,2,2,6,6-pentamethylpiperidin-4-yl)-sebacat
   15) Di-(1,2,3,6-tetramethyl-2,6-diethyl-piperidin-4-yl)-sebacat
   16) Di-(1-allyl-2,2,6,6-tetramethylpiperidin-4-yl)-phthalat
   17) 1-Propargyl-4-β-cyanoethyloxy-2,2,6,6-tetramethylpiperidin
   18) 1-Acetyl-2,2,6,6-tetramethylpiperidin-4-yl-acetat
   19) Trimellithsäure-tri-(2,2,6,6-tetramethylpiperidin-4-yl)-ester
   20) 1-Acryloyl-4-benzyloxy-2,2,6,6-tetramethylpiperidin
   21) Diethylmalonsäure-di(2,2,6,6-tetramethylpiperidin-4-yl)-ester
   22) Dibutyl-malonsäure-di-(1,2,2,6,6-pentamethylpiperidin-4-yl)-ester
   23) Butyl-(3,5-di-tert.-butyl-4-hydroxybenzyl)-malonsäure-di-(1,2,2,6,6-pentamethylpiperidin-4-yl)-ester
   24) Dibenzyl-malonsäure-di-(1,2,2,6,6-pentamethylpiperidin-4-yl)-ester
   25) Dibenzyl-malonsäure-di-(1,2,3,6-tetramethyl-2,6-diethyl-piperidin-4-yl)ester
   26) Hexan-1',6'-bis-(4-carbamoyloxy-1-n-butyl-2,2,6,6-tetramethylpiperidin)
   27) Toluol-2',4'-bis-(4-carbamoyloxy-1-n-propyl-2,2,6,6-tetramethylpiperidin)
   28) Dimethyl-bis-(2,2,6,6-tetramethylpiperidin-4-oxy)-silan
   29) Phenyl-tris-(2,2,6,6-tetramethylpiperidin-4-oxy)-silan
   30) Tris-(1-propyl-2,2,6,6-tetramethylpiperidin-4-yl)-phosphit
   31) Tris-(1-propyl-2,2,6,6-tetramethylpiperidin-4-yl)-phosphat
   32) Phenyl-[bis-(1,2,2,6,6-pentamethylpiperidin-4-yl)]-phosphonat
   33) 4-Hydroxy-1,2,2,6,6-pentamethylpiperidin
   34) 4-Hydroxy-N-hydroxyethyl-2,2,6,6-tetramethylpiperidin
   35) 4-Hydroxy-N-(2-hydroxypropyl)-2,2,6,6-tetramethylpiperidin
   36) 1-Glycidyl-4-hydroxy-2,2,6,6-tetramethylpiperidin
b) Verbindungen der Formel (III) 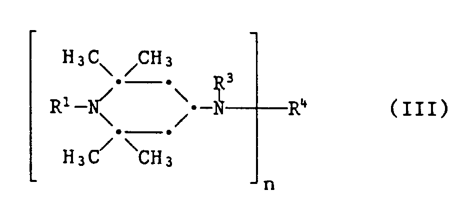 worin n die Zahl 1 oder 2 bedeutet, R¹ die unter a) angegebene Bedeutung hat, R³ Wasserstoff, C₁-C₁₂-Alkyl, C₂-C₅-Hydroxyalkyl, C₅-C₇-Cycloalkyl, C₇-C₈-Aralkyl, C₂-C₁₈-Alkanoyl, C₃-C₅-Alkenoyl oder Benzoyl ist und R⁴ wenn n 1 ist, Wasserstoff, C₁-C₁₈-Alkyl, C₃-C₈-Alkenyl, C₅-C₇-Cycloalkyl, mit einer Hydroxy-, Cyano-, Alkoxycarbonyl- oder Carbamidgruppe substituiertes C₁-C₄-Alkyl, Glycidyl, eine Gruppe der Formel -CH₂-CH(OH)-Z oder der Formel -CONH-Z ist, worin Z Wasserstoff, Methyl oder Phenyl bedeutet; wenn n 2 ist, C₂-C₁₂-Alkylen, C₆-C₁₂-Arylen, Xylylen, eine -CH₂-CH(OH)-CH₂-Gruppe oder eine Gruppe -CH₂-CH(OH)-CH₂-O-D-O- bedeutet, worin D C₂-C₁₀-Alkylen, C₆-C₁₅-Arylen, C₆-C₁₂-Cycloalkylen ist, oder vorausgesetzt, dass R³ nicht Alkanoyl, Alkenoyl oder Benzoyl bedeutet, R⁴ auch einen zweiwertigen Rest einer aliphatischen, cycloaliphatischen oder aromatischen Dicarbonsäure oder Dicarbaminsäure oder auch die Gruppe -CO-bedeuten kann, oder R³ und R⁴ zusammen, wenn n 1 ist, den zweiwertigen Rest einer aliphatischen, cycloaliphatischen oder aromatischen 1,2- oder 1,3-Dicarbonsäure bedeuten können.
   Stellen etwaige Substituenten C₁-C₁₂- oder C₁-C₁₈-Alkyl dar, so haben sie die bereits unter a) angegebene Bedeutung.
   Bedeuten etwaige Substituenten C₅-C₇-Cycloalkyl, so stellen sie insbesondere Cyclohexyl dar.
   Als C₇-C₈-Aralkyl ist R³ insbesondere Phenylethyl oder vor allem Benzyl. Als C₂-C₅-Hydroxyalkyl ist R³ insbesondere 2-Hydroxyethyl oder 2-Hydroxypropyl.
   R³ ist als C₂-C₁₈-Alkanoyl beispielsweise Propionyl, Butyryl, Octanoyl, Dodecanoyl, Hexadecanoyl, Octadecanoyl, aber bevorzugt Acetyl und als C₃-C₅-Alkenoyl insbesondere Acryloyl.
   Bedeutet R⁴ C₂-C₈-Alkenyl, dann handelt es sich z.B. um Allyl, Methallyl, 2-Butenyl, 2-Pentenyl, 2-Hexenyl oder 2-Octenyl.
   R⁴ als mit einer Hydroxy-, Cyano-, Alkoxycarbonyl- oder Carbamidgruppe substituiertes C₁-C₄-Alkyl kann z.B. 2-Hydroxyethyl, 2-Hydroxypropyl, 2-Cyanethyl, Methoxycarbonylmethyl, 2-Ethoxycarbonylethyl, 2-Aminocarbonylpropyl oder 2-(Dimethylaminocarbonyl)-ethyl sein.
   Stellen etwaige Substituenten C₂-C₁₂-Alkylen dar, so handelt es sich z.B. um Ethylen, Propylen, 2,2-Dimethylpropylen, Tetramethylen, Hexamethylen, Octamethylen, Decamethylen oder Dodecamethylen.
   Bedeuten etwaige Substituenten C₆-C₁₅-Arylen, so stellen sie z.B. o-, m-oder p-Phenylen, 1,4-Naphthylen oder 4,4'-Diphenylen dar.
   Als C₆-C₁₂-Cycloalkylen ist D insbesondere Cyclohexylen.
   Beispiele für Polyalkylpiperidin-Verbindungen dieser Klasse sind folgende Verbindungen:
   37) N,N'-Bis-(2,2,6,6-tetramethylpiperidin-4-yl)-hexamethylen-1,6-diamin
   38) N,N'-Bis-(2,2,6,6-tetramethylpiperidin-4-yl)-hexamethylen-1,6-diacetamid
   39) 1-Acetyl-4-(N-cyclohexylacetamido)-2,2,6,6-tetramethylpiperidin
   40) 4-Benzoylamino-2,2,6,6-tetramethylpiperidin
   41) N,N'-Bis-(2,2,6,6-tetramethylpiperidin-4-yl)-N,N'-dibutyl-adipamid
   42) N,N'-Bis-(2,2,6,6-tetramethylpiperidin-4-yl)-N,N'-dicyclohexyl-2-hydroxypropylen-1,3-diamin
   43) N,N'-Bis-(2,2,6,6-tetramethylpiperidin-4-yl)-p-xylylen-diamin
   44) N,N'-Bis-(2,2,6,6-tetramethylpiperidin-4-yl)-succindiamid
   45) N-(2,2,6,6-Tetramethylpiperidin-4-yl)-β-aminodipropionsäure-di-(2,2,6,6-tetramethylpiperidin-4-yl)-ester
   46) Die Verbindung der Formel 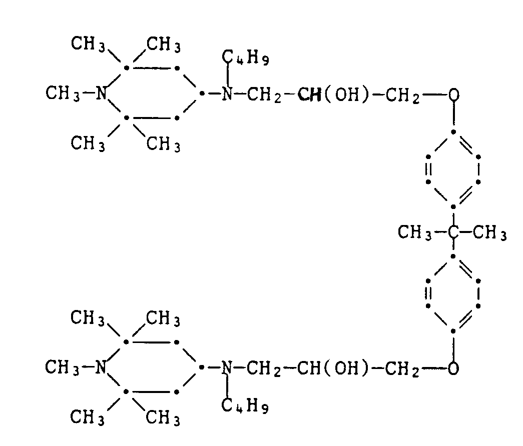
   47) 4-(Bis-2-hydroxyethyl-amino)-1,2,2,6,6-pentamethylpiperidin
   48) 4-(3-Methyl-4-hydroxy-5-tert.-butyl-benzoesäureamido)-2,2,6,6-tetramethylpiperidin
   49) 4-Methacrylamido-1,2,2,6,6-pentamethylpiperidin
c) Verbindungen der Formel (IV) 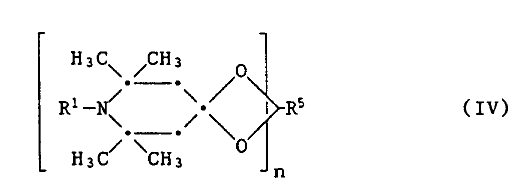 worin n die Zahl 1 oder 2 bedeutet, R¹ die unter a) angegebene Bedeutung hat und R⁵, wenn n 1 ist, C₂-C₈-Alkylen oder C₂-C₈-Hydroxyalkylen oder C₄-C₂₂-Acyloxyalkylen, und wenn n 2 ist, die Gruppe (-CH₂)₂C(CH₂-)₂ bedeutet.
   Bedeutet R⁵ C₂-C₈-Alkylen oder -Hydroxyalkylen, so stellt es beispielsweise Ethylen, 1-Methyl-ethylen, Propylen, 2-Ethyl-propylen oder 2-Ethyl-2-hydroxymethylpropylen dar.
   Als C₄-C₂₂-Acyloxyalkylen bedeutet R⁵ z.B. 2-Ethyl-2-acetoxymethylpropylen.
   Beispiele für Polyalkylpiperidin-Verbindungen dieser Klasse sind folgende Verbindungen:
   50) 9-Aza-8,8,10,10-tetramethyl-1,5-dioxaspiro[5.5]undecan
   51) 9-Aza-8,8,10,10-tetramethyl-3-ethyl-1,5-dioxaspiro[5.5]undecan
   52) 8-Aza-2,7,7,8,9,9-hexamethyl-1,4-dioxaspiro[4.5]decan
   53) 9-Aza-3-hydroxymethyl-3-ethyl-8,8,9,10,10-pentamethyl-1,5-dioxaspiro [5.5]undecan
   54) 9-Aza-3-ethyl-3-acetoxymethyl-9-acetyl-8,8,10,10-tetramethyl-1,5-dioxaspiro[5.5]undecan
   55) 2,2,6,6-Tetramethylpiperidin-4-spiro-2'-(1',3'-dioxan)-5'-spiro-5''-(1'', 3''-dioxan)-2''-spiro-4'''-(2''',2''',6''',6'''-tetramethylpiperidin).
d) Verbindungen der Formeln VA, VB und VC 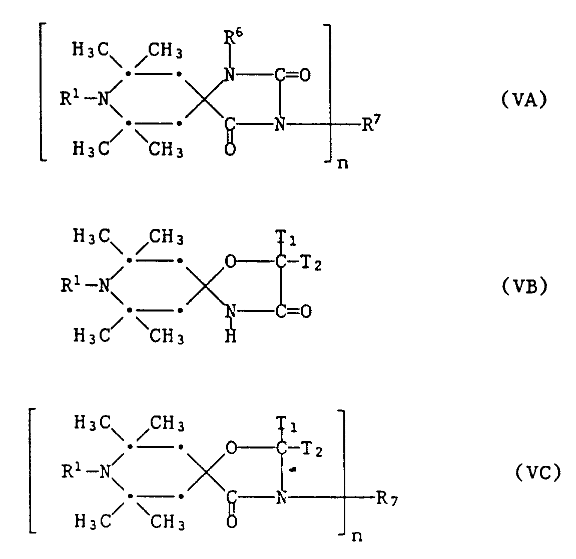 worin n die Zahl 1 oder 2 bedeutet, R¹ die unter a) angegebene Bedeutung hat, R⁶ Wasserstoff, C₁-C₁₂-Alkyl, Allyl, Benzyl, Glycidyl oder C₂-C₆-Alkoxyalkyl ist und R⁷, wenn n 1 ist, Wasserstoff, C₁-C₁₂-Alkyl, C₃-C₅-Alkenyl, C₇-C₉-Aralkyl, C₅-C₇-Cycloalkyl, C₂-C₄-Hydroxyalkyl, C₂-C₆-Alkoxyalkyl, C₆-C₁₀-Aryl, Glycidyl oder eine Gruppe der Formel -(CH₂)ₚ-COO-Q oder der Formel -(CH₂)ₚ-O-CO-Q ist, worin p 1 oder 2 und Q C₁-C₄-Alkyl oder Phenyl sind, wenn n 2 ist, C₂-C₁₂-Alkylen, C₄-C₁₂-Alkenylen, C₆-C₁₂-Arylen, eine Gruppe -CH₂CH(OH)-CH₂-O-D-O-CH₂CH(OH)-CH₂-, worin D C₂-C₁₀-Alkylen, C₆-C₁₅-Arylen, C₆-C₁₂-Cycloalkylen ist, oder eine Gruppe -CH₂CH(OZ')CH₂-(OCH₂-CH(OZ')CH₂)₂- bedeutet, worin Z' Wasserstoff, C₁-C₁₈-Alkyl, Allyl, Benzyl, C₂-C₁₂-Alkanoyl oder Benzoyl ist, T₁ und T₂ unabhängig voneinander Wasserstoff, C₁-C₁₈-Alkyl oder gegebenenfalls durch Halogen oder C₁-C₄-Alkyl substituiertes C₆-C₁₀-Aryl oder C₇-C₉-Aralkyl bedeuten oder T₁ und T₂ zusammen mit dem sie bindenden C-Atom einen C₅-C₁₂-Cycloalkanring bilden.
   Bedeuten etwaige Substituenten C₁-C₁₂-Alkyl, so stellen sie z.B. Methyl, Ethyl, n-Propyl, n-Butyl, sek.-Butyl, tert.-Butyl, n-Hexyl, n-Octyl, 2-Ethyl-hexyl, n-Nonyl, n-Decyl, n-Undecyl oder n-Dodecyl dar.
   Etwaige Substituenten in der Bedeutung von C₁-C₁₈-Alkyl können z.B. die oben angeführten Gruppen und dazu noch beispielsweise n-Tridecyl, n-Tetradecyl, n-Hexadecyl oder n-Octadecyl darstellen.
   Bedeuten etwaige Substituenten C₂-C₆-Alkoxyalkyl, so stellen sie z.B. Methoxymethyl, Ethoxymethyl, Propoxymethyl, tert.-Butoxymethyl, Ethoxyethyl, Ethoxypropyl, n-Butoxyethyl, tert.-Butoxyethyl, Isopropoxyethyl oder Propoxypropyl dar.
   Stellt R⁷ C₃-C₅-Alkenyl dar, so bedeutet es z.B. 1-Propenyl, Allyl, Methallyl, 2-Butenyl oder 2-Pentenyl.
   Als C₇-C₉-Aralkyl sind R⁷, T₁ und T₂ insbesondere Phenethyl oder vor allem Benzyl. Bilden T₁ und T₂ zusammen mit dem C-Atom einen Cycloalkanring, so kann dies z.B. ein Cyclopentan-, Cyclohexan-, Cyclooctan- oder Cyclododecanring sein.
   Bedeutet R⁷ C₂-C₄-Hydroxyalkyl, so stellt es z.B. 2-Hydroxyethyl, 2-Hydroxypropyl, 2-Hydroxybutyl oder 4-Hydroxybutyl dar.
   Als C₆-C₁₀-Aryl bedeuten R⁷ , T₁ und T₂ insbesondere Phenyl, α- oder β-Naphthyl, die gegebenenfalls mit Halogen oder C₁-C₄-Alkyl substituiert sind.
   Stellt R⁷ C₂-C₁₂-Alkylen dar, so handelt es sich z.B. um Ethylen, Propylen, 2,2-Dimethylpropylen, Tetramethylen, Hexamethylen, Octamethylen, Decamethylen oder Dodecamethylen.
   Als C₄-C₁₂-Alkenylen bedeutet R⁷ insbesondere 2-Butenylen, 2-Pentenylen oder 3-Hexenylen.
   Bedeutet R⁷ C₆-C₁₂-Arylen, so stellt es beispielsweise o-, m- oder p-Phenylen, 1,4-Naphthylen oder 4,4'-Diphenylen dar.
   Bedeutet Z' C₂-C₁₂-Alkanoyl, so stellt es beispielsweise Propionyl, Butyryl, Octanoyl, Dodecanoyl, aber bevorzugt Acetyl dar.
   D hat als C₂-C₁₀-Alkylen, C₆-C₁₅-Arylen oder C₆-C₁₂-Cycloalkylen die unter b) angegebene Bedeutung.
   Beispiele für Polyalkylpiperidin-Verbindungen dieser Klasse sind folgende Verbindungen:
   56) 3-Benzyl-1,3,8-triaza-7,7,9,9-tetramethylspiro[4.5]decan-2,4-dion
   57) 3-n-Octyl-1,3,8-triaza-7,7,9,9-tetramethylspiro[4.5]decan-2,4-dion
   58) 3-Allyl-1,3,8-triaza-1,7,7,9,9-pentamethylspiro[4.5]decan-2,4-dion
   59) 3-Glycidyl-1,3,8-triaza-7,7,8,9,9-pentamethylspiro[4.5]decan-2,4-dion
   60) 1,3,7,7,8,9,9-Heptamethyl-1,3,8-triazaspiro[4.5]decan-2,4-dion
   61) 2-Iso-propyl-7,7,9,9-tetramethyl-1-oxa-3,8-diaza-4-oxo-spiro-[4.5]-decan
   62) 2,2-Dibutyl-7,7,9,9-tetramethyl-1-oxa-3,8-diaza-4-oxo-spiro-[4.5]-decan
   63) 2,2,4,4-Tetramethyl-7-oxa-3,20-diaza-21-oxo-dispiro[5.1.11.2]-heneicosan
   64) 2-Butyl-7,7,9,9-tetramethyl-1-oxa-4,8-diaza-3-oxo-spiro-[4,5]decan
   65) 8-Acetyl-3-dodecyl-1,3,8-triaza-7,7,9,9-tetramethylspiro[4,5]-decan-2,4-dion
   oder die Verbindungen der folgenden Formeln: 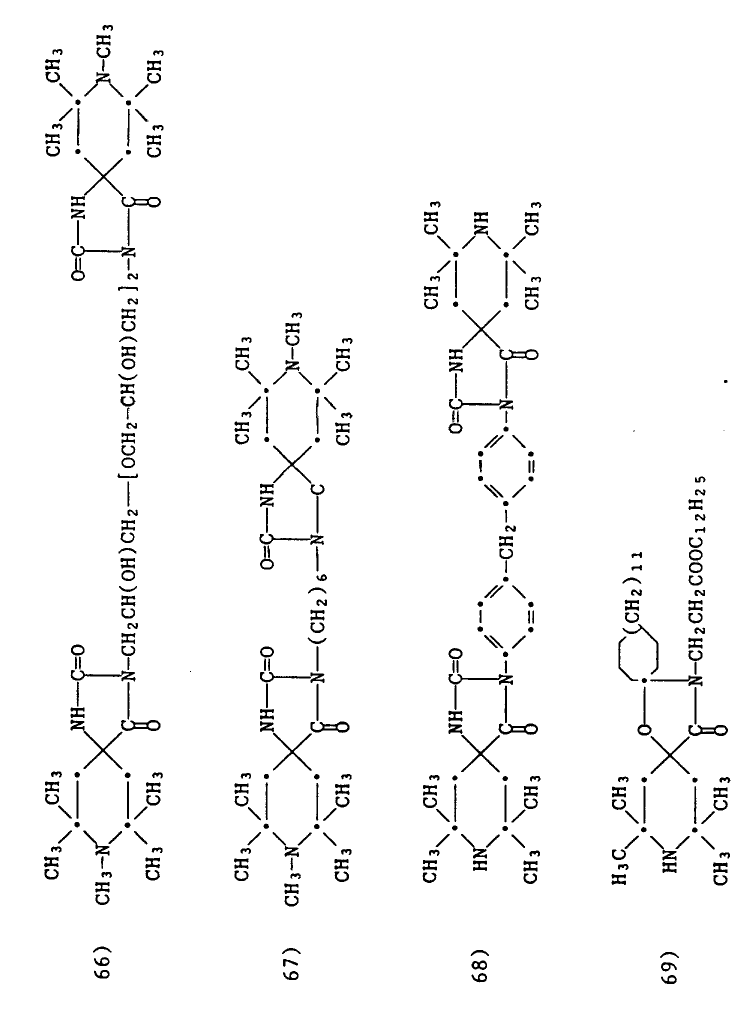
e) Verbindungen der Formel VI 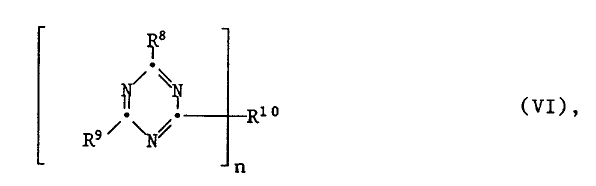 worin n die Zahl 1 oder 2 ist und R⁸ eine Gruppe der Formel 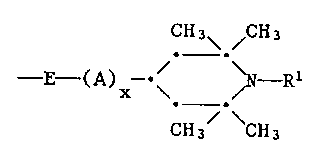 bedeutet, worin R¹ die unter a) angegebene Bedeutung hat, E -O- oder -NR¹¹- ist, A C₂-C₆-Alkylen oder -(CH₂)₃-O- und x die Zahlen 0 oder 1 bedeuten, R⁹ gleich R⁸ oder eine der Gruppen -NR¹¹R¹², -OR¹³, -NHCH₂OR¹³ oder -N(CH₂OR¹³)₂ ist, R¹⁰, wenn n = 1 ist, gleich R⁸ oder R⁹, und wenn n = 2 ist, eine Gruppe -E-B-E- ist, worin B gegebenenfalls durch -N(R¹¹)- unterbrochenes C₂-C₆-Alkylen bedeutet, R¹¹ C₁-C₁₂-Alkyl, Cyclohexyl, Benzyl oder C₁-C₄-Hydroxyalkyl oder eine Gruppe der Formel 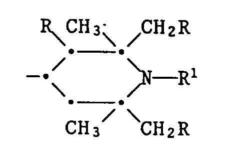 ist, worin R H bedeutet, R¹² C₁-C₁₂-Alkyl, Cyclohexyl, Benzyl, C₁-C₄-Hydroxyalkyl und R¹³ Wasserstoff, C₁-C₁₂-Alkyl oder Phenyl bedeuten oder R¹¹ und R¹² zusammen C₄-C₅-Alkylen oder -Oxaalkylen, beispielsweise 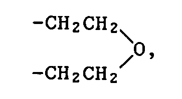 oder eine Gruppe der Formel 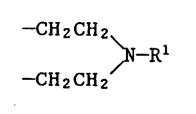 sind oder auch R¹¹ und R¹² jeweils eine Gruppe der Formel 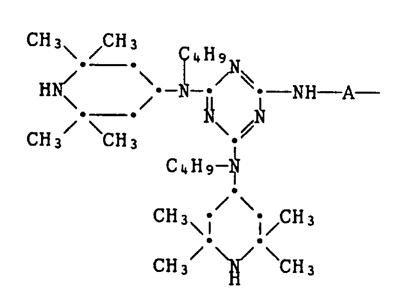 bedeuten.
   Bedeuten etwaige Substituenten C₁-C₁₂-Alkyl, so stellen sie beispielsweise Methyl, Ethyl, n-Propyl, n-Butyl, sek.-Butyl, tert.-Butyl, n-Hexyl, n-Octyl, 2-Ethylhexyl, n-Nonyl, n-Decyl, n-Undecyl oder n-Dodecyl dar.
   Bedeuten etwaige Substituenten C₁-C₄-Hydroxyalkyl, so stellen sie z.B. 2-Hydroxyethyl, 2-Hydroxypropyl, 3-Hydroxypropyl, 2-Hydroxybutyl oder 4-Hydroxybutyl dar.
   Bedeutet A C₂-C₆-Alkylen, so stellt es beispielsweise Ethylen, Propylen, 2,2-Dimethylpropylen, Tetramethylen oder Hexamethylen dar.
   Stellen R¹¹ und R¹² zusammen C₄-C₅-Alkylen oder Oxaalkylen dar, so bedeutet dies z.B. Tetramethylen, Pentamethylen oder 3-Oxapentamethylen.
   Beispiele für Polyalkylpiperidin-Verbindungen dieser Klasse sind die Verbindungen der folgenden Formeln: 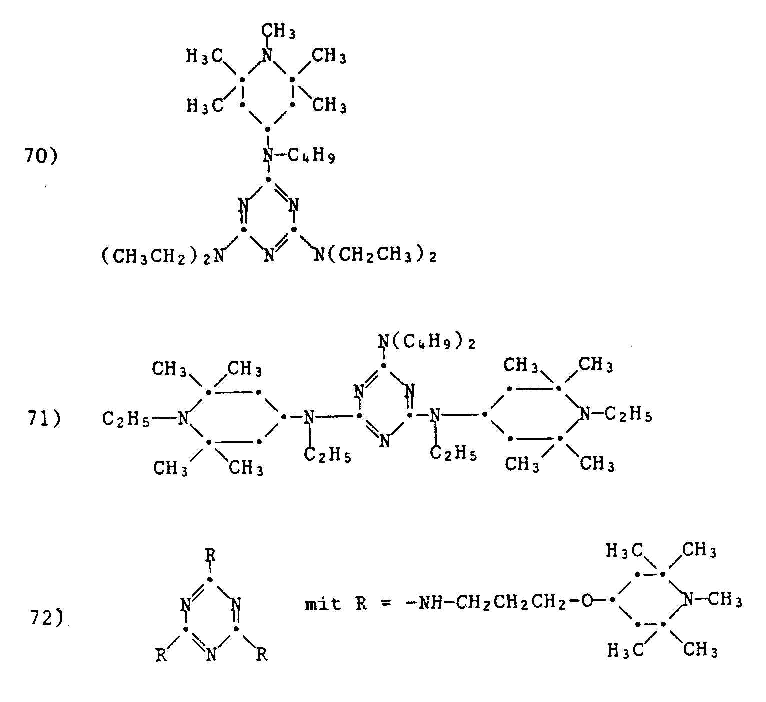 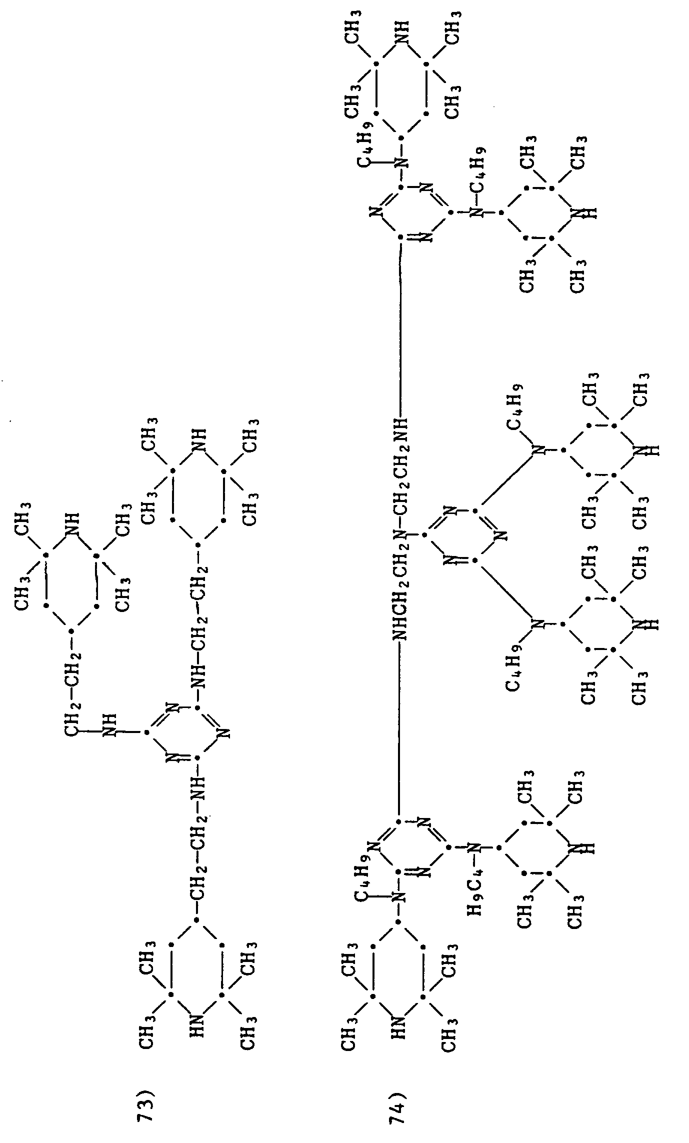 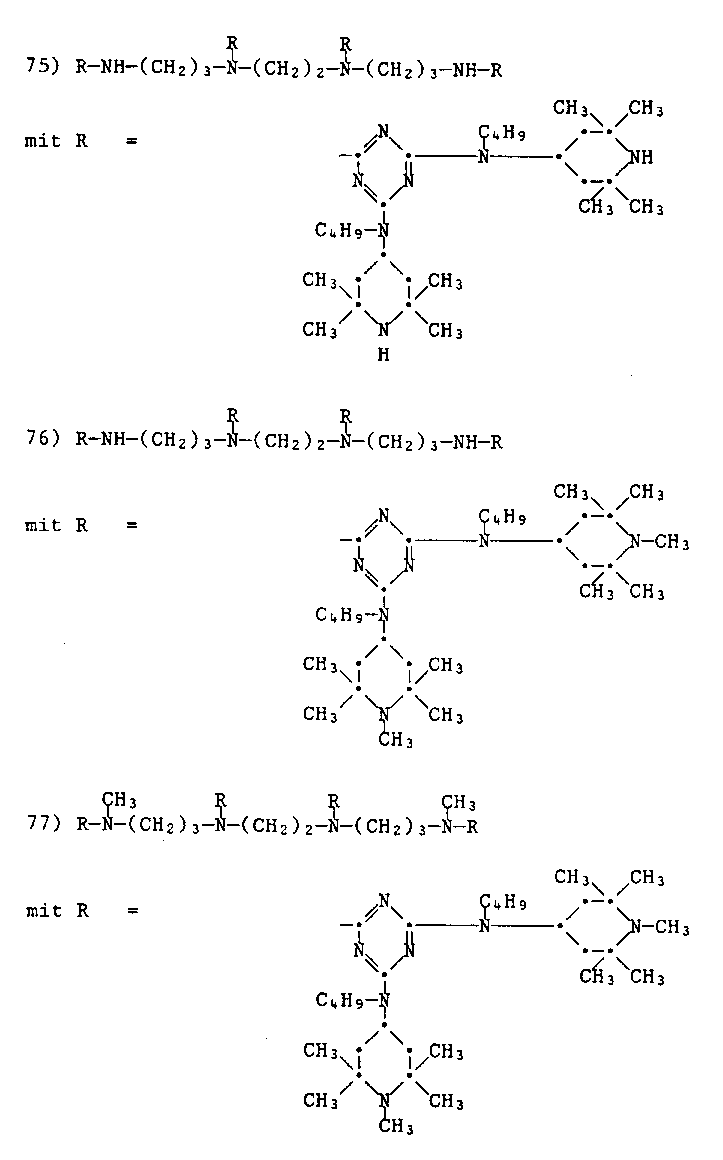 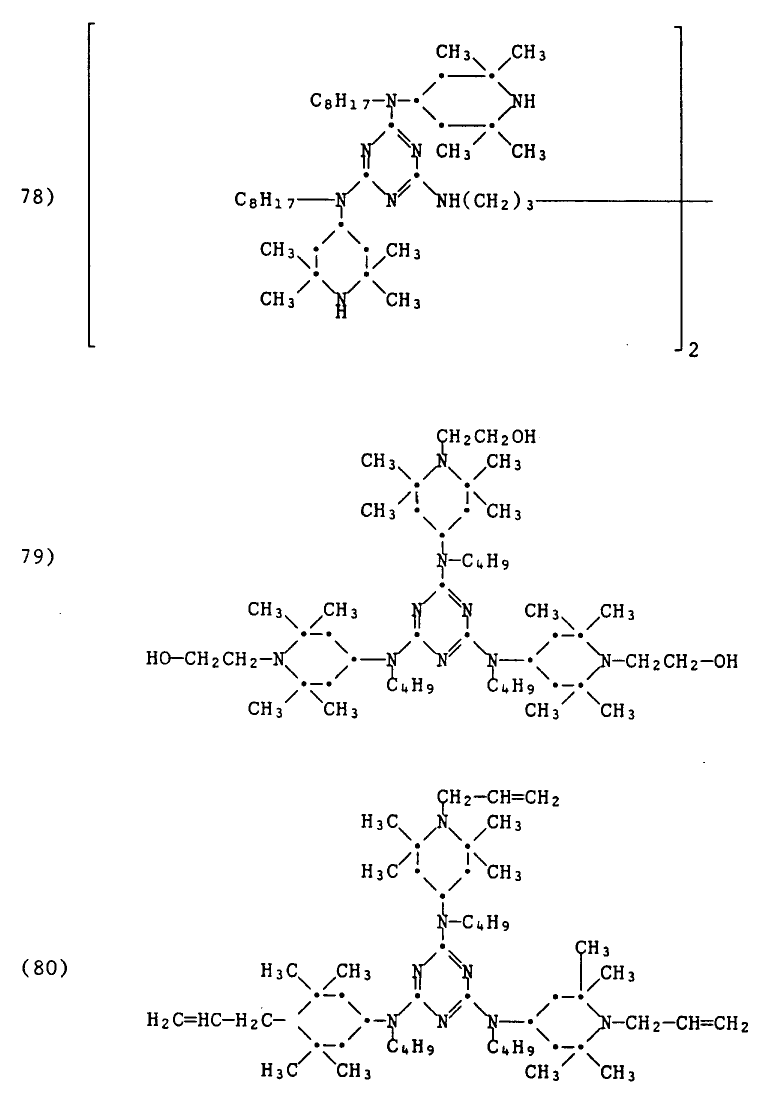
f) Oligomere oder polymere Verbindungen, deren wiederkehrende Struktureinheit einen 2,2,6,6-Tetraalkylpiperidinrest der Formel (I) enthält, insbesondere Polyester, Polyäther, Polyamide, Polyamine, Polyurethane, Polyharnstoffe, Polyaminotriazine, Poly(meth)acrylate, Poly(meth)acrylamide und deren Copolymeren, die solche Reste enthalten.

Beispiele für 2,2,6,6-Polyalkylpiperidin-Lichtschutzmittel dieser Klasse sind die Verbindungen der folgenden Formeln, wobei m eine Zahl von 2 bis etwa 200 bedeutet. 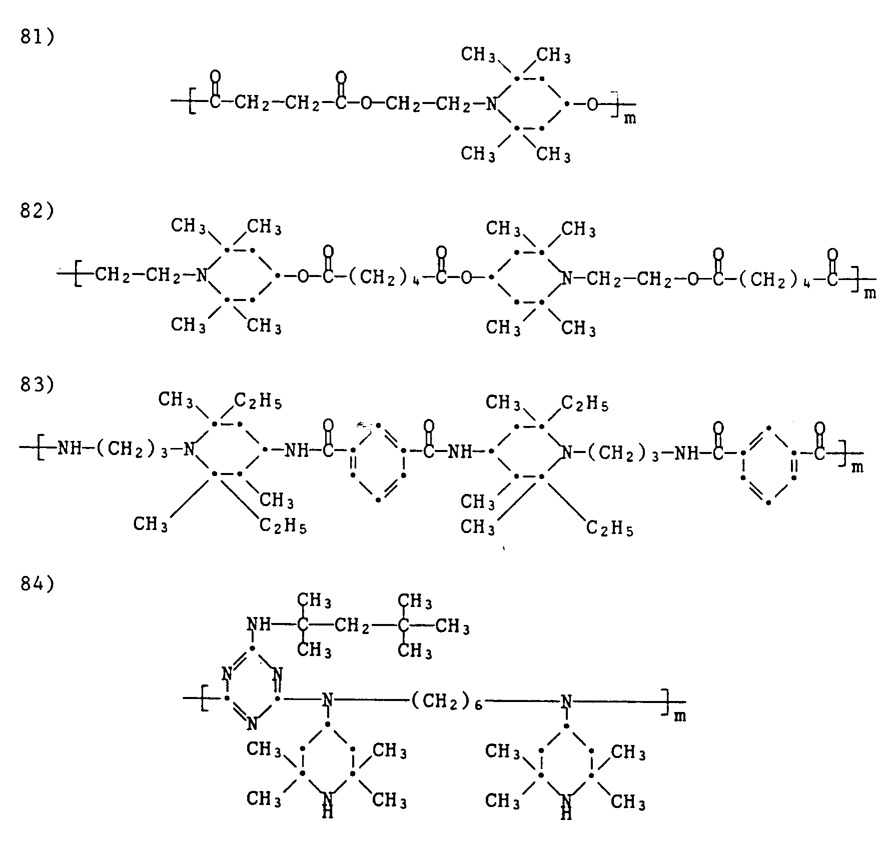 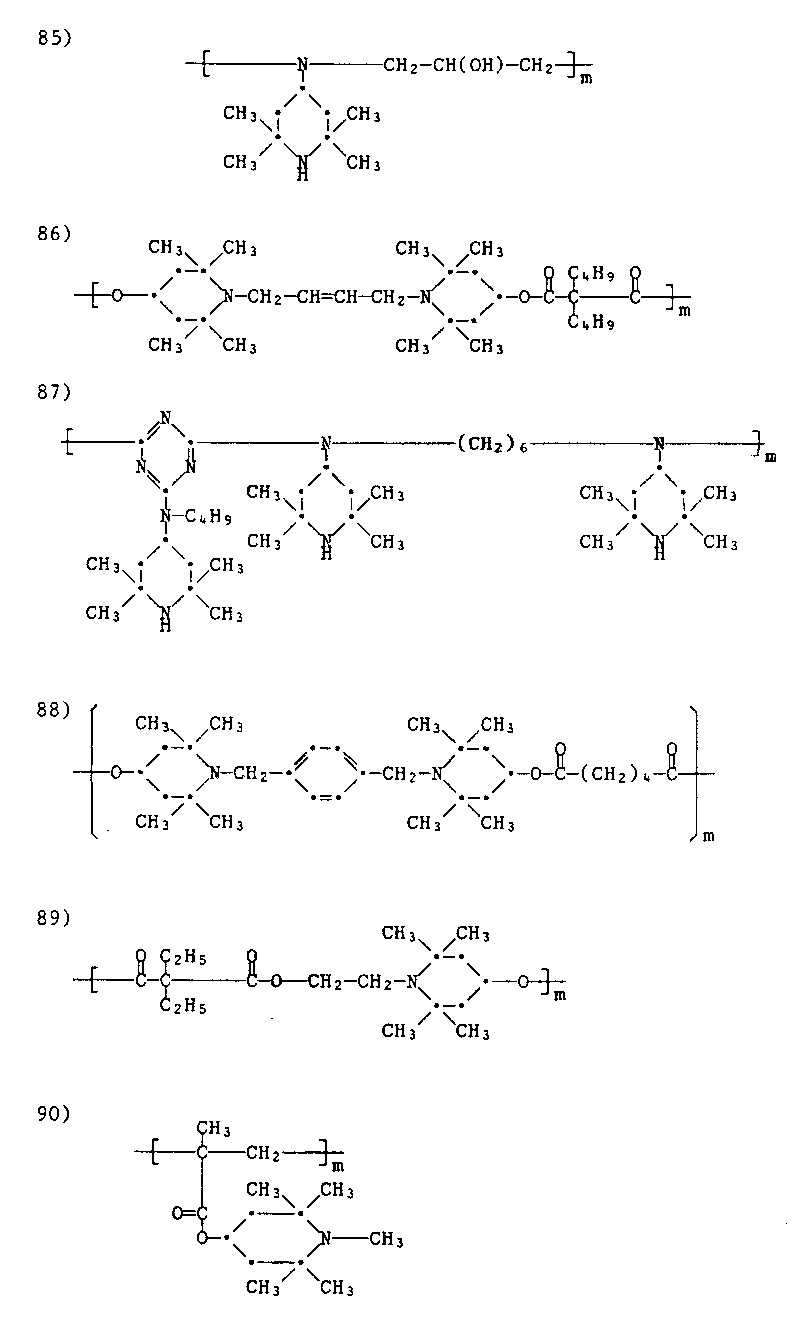 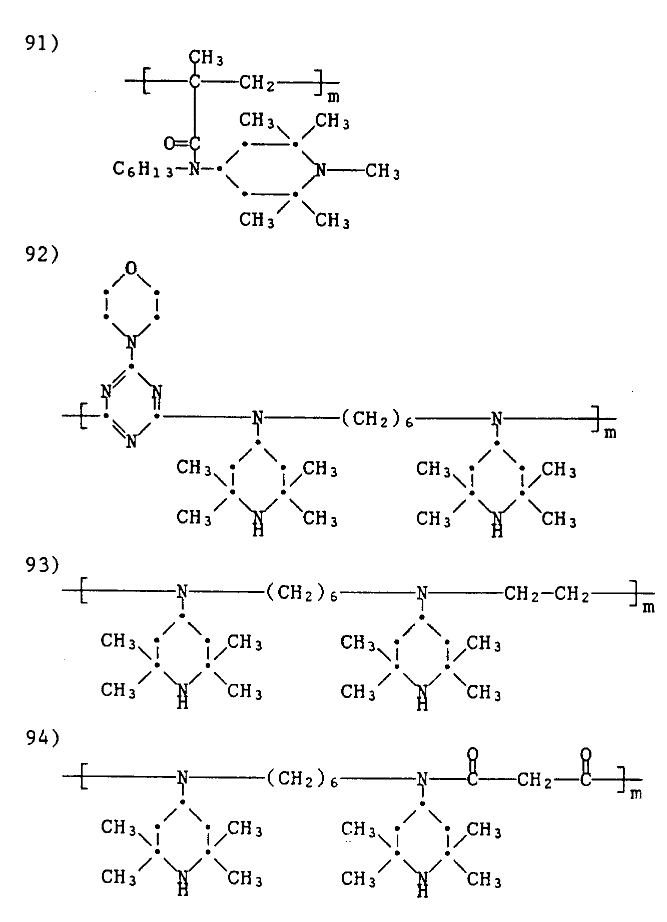
Von diesen Klassen sind die Klassen e) und f) besonders geeignet, insbesondere solche Tetraalkylpiperidinverbindungen, die s-Triazin-Gruppen enthalten. Besonders geeignet sind die Verbindungen 74, 76, 84, 87 und 92.

Die Menge des Zusatzes der Tetramethylpiperidinverbindung richtet sich nach dem gewünschten Grad der Stabilisierung. Im allgemeinen setzt man 0,01 bis 5 Gew.-%, insbesondere 0,05 bis 1 Gew.-%, bezogen auf das Polymer, zu. Vorzugsweise sollte das Molverhältnis von Tetramethylpiperidin und Aluminiumalkyl 1 nicht wesentlich überschreiten.

Die erfindungsgemäss als Costabilisatoren Zur Polymerisation zugesetzten Phosphor-III-ester können Phosphite, Phosphonite oder Phosphinite sein. Sie können eine oder mehrere Phosphorester-Gruppen enthalten. Bevorzugt verwendet man einen Phosphor-III-ester der Formel A, B oder C 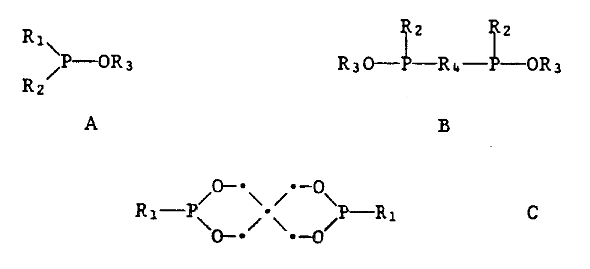
worin R₁ und R₂ unabhängig voneinander C₁-C₁₂-Alkyl, C₅-C₈-Cycloalkyl, C₆-C₁₂-Aryl, durch ein bis drei C₁-C₁₂-Alkyl substituiertes Phenyl oder einen Rest -OR₃ bedeuten,
R₃ C₆-C₂₀-Alkyl, C₅-C₈-Cycloalkyl, C₆-C₁₂-Aryl oder durch ein bis drei C₁-C₁₂-Alkyl substituiertes Phenyl bedeutet und
R₄ unsubstituiertes oder durch C₁-C₁₂-Alkyl substituiertes C₆-C₁₄-Arylen oder einen Rest -O-R₅-O- bedeutet, worin
R₅ unsubstituiertes oder durch C₁-C₁₂-Alkyl substituiertes C₆-C₁₄-Arylen oder einen Rest -Phen-R₆-Phen- bedeutet, worin Phen Phenylen bedeutet und
R₆ -O-, -S-, -SO₂-, -CH₂-, oder -C(CH₃)₂- bedeutet.

Unter den Verbindungen der Formel A verwendet man bevorzugt solche, worin R₁ und R₂ einen Rest -OR₃ bedeuten und R₃ C₆-C₂₀-Alkyl, Phenyl oder durch ein bis zwei C₁-C₁₂-Alkylgruppen substituiertes Phenyl bedeutet.

Unter den Verbindungen der Formel B verwendet man bevorzugt solche, worin R₂ eine Gruppe -OR₃ ist, R₃ Phenyl oder durch ein bis zwei C₁-C₁₂-Alkylgruppen substituiertes Phenyl bedeutet und R₄ einen Diphenylen-Rest bedeutet.

Unter den Verbindungen der Formel C verwendet man bevorzugt solche, worin R₁ ein Rest -OR₃ ist, R₃ Phenyl oder durch ein bis drei C₁-C₁₂-Alkylgruppen substituiertes Phenyl bedeutet.

Bevorzugt verwendet man einen Phosphor-III-ester, der mindestens eine Gruppe P-O-Ar enthält, wobei Ar einen Mono- oder Dialkylphenylrest bedeutet.

Beispiele für verwendbare Phosphor-III-ester sind:
Triphenylphosphit, Decyl-diphenylphosphit, Phenyl-didecylphosphit, Tris-(nonylphenyl)-phosphit, Trilaurylphosphit, Trioctadecylphosphit, Distearyl-pentaerythritdiphosphit, Tris-(2,4-di-tert.butylphenyl)-phosphit, Diisodecylpentaerythrit-diphosphit, Bis-(2,4-di-tert.butyl-phenyl)-pentaerythritdiphosphit, Tristearyl-sorbit-triphosphit, Tetrakis-(2,4-di-tert.butylphenyl)-4,4'-biphenylen-diphosphonit, Bis-(2,6-di-tert.butyl-4-methyl-phenyl)-pentaerythrit-diphosphit.

Die Menge des Zusatzes an Phosphor-III-ester richtet sich nach der Menge an zugesetzter Piperidinverbindung. Im allgemeinen verwendet man 0,01 bis 1 Gew.-%, insbesondere 0,05 bis 0,5 Gew.-%, bezogen auf das Polymere.

Zusätzlich zum Phosphor-III-ester können weitere Costabilisatoren und Zusatzstoffe, die den Polymerisationsprozess nicht stören, eingesetzt werden, insbesondere können Antioxidantien vom Typ der sterisch gehinderten Phenole zur Polymerisation zugesetzt werden. Diese Phenole sind allgemein bekannt als Antioxidantien für organische Materialien und werden für die Stabilisierung von Polymeren häufig verwendet. Beispiele für solche Phenol-Antioxidantien sind:
1. Alkylierte Monophenole, z.B. 2,6-Di-tert.butyl-4-methylphenol, 2-Tert.butyl-4,6-dimethylphenol, 2,6-Di-tert.butyl-4-ethylphenol, 2,6-Di-tert.butyl-4-n-butylphenol, 2,6-Di-tert.butyl-4-i-butylphenol, 2,6-Di-cyclopentyl-4-methylphenol, 2-(α-Methylcyclohexyl)-4,6-di- methylphenol, 2,6-Di-octadecyl-4-methylphenol, 2,4,6-Tri-cyclohexylphenol, 2,6-Di-tert.butyl-4-methoxymethylphenol, 2,6-Di-nonyl-4-methylphenol.
2. Alkylierte Hydrochinone, z.B. 2,6-Di-tert.butyl-4-methoxyphenol, 2,5-Di-tert.butyl-hydrochinon, 2,5-Di-tert.amyl-hydrochinon, 2,6-Diphenyl-4-octadecyloxyphenol.
3. Hydroxylierte Thiodiphenylether, z.B. 2,2'-Thio-bis-(6-tert.-butyl-4-methylphenol), 2,2'-Thio-bis-(4-octylphenol), 4,4'-Thio-bis-(6-tert.butyl-3-methylphenol), 4,4'-Thio-bis-(6-tert.butyl-2-methylphenol).
4. Alkyliden-Bisphenole, z.B. 2,2'-Methylen-bis-(6-tert.butyl-4-methylphenol), 2,2'-Methylen-bis-(6-tert.butyl-4-ethylphenol), 2,2'-Methylen-bis-[4-methyl-6-(α-methylcyclohexyl)-phenol], 2,2'-Methylen-bis-(4-methyl-6-cyclohexylphenol), 2,2'-Methylen-bis-(6-nonyl-4-methylphenol), 2,2'-Methylen-bis-(4,6-di-tert.butylphenol), 2,2'-Ethyliden-bis-(4,6-di-tert.butylphenol), 2,2'-Ethyliden-bis-(6-tert.butyl-4-isobutylphenol), 2,2'-Methylen-bis-[6-(α-methylbenzyl)-4-nonylphenol], 2,2'-Methylen-bis-[6-(α,α-dimethylbenzyl)-4-nonylphenol], 4,4'-Methylen-bis-(2,6-di-tert.butylphenol), 4,4'-Methylen-bis-(6-tert.butyl-2-methylphenol), 1,1-Bis-(5-tert.butyl-4-hydroxy-2-methylphenyl)-butan, 2,6-Bis-(3-tert.butyl-5-methyl-2-hydroxybenzyl)-4-methylphenol, 1,1,3-Tris-(5-tert.butyl-4-hydroxy-2-methylphenyl)-butan, 1,1-Bis-(5-tert.butyl-4-hydroxy-2-methylphenyl)-3-n-dodecylmercaptobutan, Ethylenglycol-bis-[3,3-bis-(3'-tert.butyl-4'-hydroxyphenyl)-butyrat], Bis-(3-tert.butyl-4-hydroxy-5-methylphenyl)-dicyclopentadien, Bis-[2-(3'-tert.butyl-2'-hydroxy-5'-methyl-benzyl)-6-tert.butyl-4-methyl-phenyl]-terephthalat.
5. Benzylverbindungen, z.B. 1,3,5-Tris-(3,5-di-tert.butyl-4-hydroxybenzyl)-2,4,6-trimethylbenzol, Bis-(3,5-di-tert.butyl-4-hydroxybenzyl)-sulfid, 3,5-Di-tert.butyl-4-hydroxybenzyl-mercaptoessigsäure-isooctylester, Bis-(4-tert.butyl-3-hydroxy-2,6-dimethylbenzyl)-dithiol-terephthalat, 1,3,5-Tris-(3,5-di-tert.butyl-4-hydroxybenzyl)-isocyanurat, 1,3,5-Tris-(4-tert.butyl-3-hydroxy-2,6-dimethylbenzyl)-isocyanurat, 3,5-Di-tert.butyl-4-hydroxybenzyl-phosphonsäure-dioctadecylester, Ca-Salz des 3,5-Di-tert.butyl-4-hydroxybenzyl-phosphonsaure-monoethylester, 1,3,5-Tris-(3,5-dicyclohexyl-4-hydroxybenzyl)isocyanurat.
6. Acylaminophenole, z.B. 4-Hydroxy-laurinsäureanilid, 4-Hydroxy-stearinsäureanilid, 2,4-Bis-(octylmercapto)-6-(3,5-di-tert.butyl-4-hydroxyanilino)-s-triazin, N-(3,5-di-tert.butyl-4-hydroxyphenyl)-carbaminsäureoctylester.
7. Ester der β-(3,5-Di-tert.butyl-4-hydroxyphenyl)-propionsäure mit ein- oder mehrwertigen Alkoholen, wie z.B. mit Methanol, Octadecanol, 1,6-Hexandiol, Neopentylglycol, Thiodiethylenglycol, Diethylenglycol, Triethylengglycol, Pentaerythrit, Tris-(hydroxyethyl)-isocyanurat, N,N'-Bis-(hydroxyethyl)-oxalsäurediamid.
8. Ester der β-(5-tert.Butyl-4-hydroxy-3-methylphenyl)-propionsaure mit ein- oder mehrwertigen Alkoholen, wie z.B. mit Methanol, Octadecanol, 1,6-Hexandiol, Neopentylglycol, Thiodiethylenglycol, Diethylenglycol, Triethylenglycol, Pentaerythrit, Tris-(hydroxy)ethylisocyanurat, N,N'-Bis-(hydroxyethyl)-oxalsäurediamid.
9. Ester der β-(3,5-Dicyclohexyl-4-hydroxyphenyl)-propionsäure mit ein- oder mehrwertigen Alkoholen, wie z.B. mit Methanol, Octadecanol, 1,6-Hexandiol, Neopentylglycol, Thiodiethylenglycol, Diethylenglycol, Triethylenglycol, Pentaerythrit, Tris-(hydroxy)ethyl-isocyanurat, N,N'-Bis-(hydroxyethyl)-oxalsäurediamid.
10. Amide der β-(3,5-Di-tert.butyl-4-hydroxyphenyl)-propionsäure, wie z.B. N,N'-Bis-(3,5-di-tert.butyl-4-hydroxyphenylpropionyl)-hexamethylendiamin, N,N'-Bis-(3,5-di-tert.butyl-4-hydroxyphenylpropionyl)-trimethylendiamin, N,N'-Bis-(3,5-di-tert.butyl-4-hydroxyphenylpropionyl)-hydrazin.

Die Menge an zugesetztem Antioxidans richtet sich nach der Menge des Phosphor-III-esters. Im allgemeinen werden 0,005 bis 0,5 Gew.-%, insbesondere 0,01 bis 0,2 Gew.-%, bezogen auf das Polymere, zugesetzt.

Die folgenden Beispiele erläutern das Verfahren näher, ohne die Erfindung auf die Beispiele zu beschränken. Darin bedeuten Teile Gewichtsteile und % Gewichtsprozente soweit nicht anders angegeben.

### Beispiel 1 - Polymerisation von Propylen

Die Polymerisation erfolgt in einem thermostatisierten 3 Liter-Rührautoklaven aus rostfreiem Stahl, der vor Beginn der Polymerisation durch einstündiges Spülen mit Propylengas bei 70°C getrocknet wird. Die Herstellung der festen Katalysatorkomponente aus sphärischem MgCl₂ und TiCl₄ erfolgt wie in Beispiel 3 der DE-A-2 933 997 beschrieben, mit dem Unterschied, dass anstelle von 21,6 mmol Ethylbenzoat 9,2 mmol Diisobutylphthalat verwendet werden. 10 mg dieses Katalysators werden in 25 ml Hexan suspendiert unter Zusatz von 5 mmol Triethylaluminium und 0,2 mmol Diphenyldimethoxysilan. Die Suspension wird mittels Argon in den Autoklaven gedrückt, in welchem sich 700 g flüssiges Propylen unter 0,2 bar Wasserstoff-Ueberdruck befinden. Unter Rühren wird auf 70°C erwärmt und bei dieser Temperatur 2 Stunden gehalten. Dann wird das überschüssige Propylen abgeblasen und das erhaltene Polymerisat 10 Minuten bei 100°C mit Wasserdampf behandelt und anschliessend 8 Stunden bei 50°C getrocknet. Das Polymerisat besteht aus kugelförmigen Teilchen. Folgende Untersuchungen des Polymerisates werden ausgeführt:
Die Katalysatoraktivität (g Polymer/g Katalysator) wird aus dem durch Atomabsorption bestimmten Mg-Gehalt und der Polymerausbeute berechnet.

Die Isotaktizität wird bestimmt als prozentualer Anteil des in Xylol unlöslichen Polymeren. Dazu wird das Polymere in heissem Xylol gelöst und nach dem Abkühlen auf Raumtemperatur der unlösliche Anteil abfiltriert und bis zur Gewichtskonstanz getrocknet.

Die Polymermorphologie wird visuell qualitativ beurteilt, um festzustellen, ob Agglomerationen stattgefunden haben.

Die Farbe des Polymers wird durch den Yellowness Index gemäss ASTM D 1925-70 charakterisiert.

Als indirektes Mass für das Molekulargewicht wird die Grenzviskosität [η] in Tetrachlorethylen bei 135°C bestimmt sowie der Schmelzindex (Melt Flow Index) gemäss Methode ASTM D 1238 (2,16 kg/230°C).

Die Stabilität gegen oxidativen Abbau wird bestimmt durch die Zeit bis zu einer merklichen Versprödung des Polymeren bei Ofenalterung bei erhöhter Temperatur. Dieser Test wird an Platten durchgeführt, die durch fünfminütiges Verpressen bei 220°C hergestellt werden.

Für das oben beschriebene unstabilisierte Polypropylen ergeben sich folgende Werte:

| | |
|---|---|
| Katalysatoraktivität | 45,5 kg/g |
| Isotaktizität | 97,0 % |
| Grenzviskosität | 1,8 dl/g |
| Morphologie | kugelförmig |
| Schmelzindex | 15 g/10 min |
| Yellowness Index | 4,5 |
| Ofenalterung von Platten | bei 135°C: 0,75 h |
| | bei 150°C: 0,50 h |

In den folgenden Beispielen werden folgende Stabilisatoren verwendet:
a) Piperidinderivate 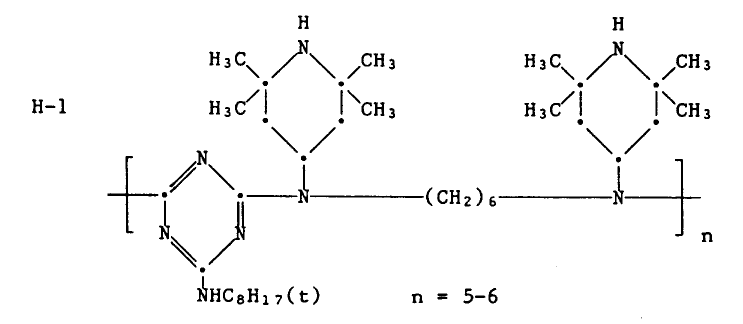
b) Phosphorverbindungen
   P-1 Tris(2,4-di-tert.butylphenyl)-phosphit 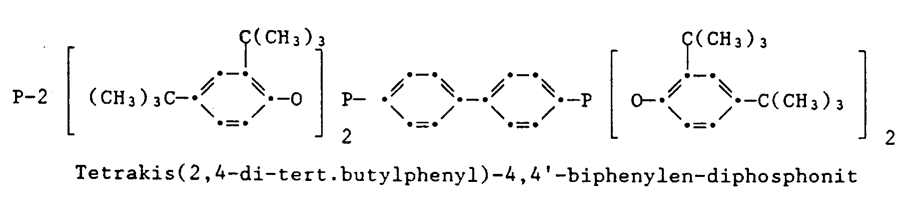
c) Antioxidantien
   AO-1 β-(3,5-Di-tert.butyl-4-hydroxyphenyl)-propionsäure-octadecylester
   AO-2 2,6-Di(tert.butyl)-4-octadecylphenol
   AO-3 Tris(3,5-di-tert.butyl-4-hydroxybenzyl)-isocyanurat
   AO-4 1,1,3-Tris(2-methyl-4-hydroxy-5-tert.butyl)-butan.

### Beispiele 2-4

Es wird wie in Beispiel 1 verfahren. 10 Minuten nach Beginn der Polymerisation wird eine Lösung der in Tabelle 1 angegebenen Stabilisatoren in 100 ml Hexan in den Autoklaven eingespritzt. In Beispiel 3 und 4 wird ein Drittel des Aktivators zusammen mit den Stabilisatoren zugegeben.

**Tabelle 1**

| Beispiel | 2 | 3 | 4 |
|---|---|---|---|
| Piperidinderivat | 0,50 g H-1 | 0,36 g H-1 | 0,36 g H-1 |
| Phosphorverbindung | 0,34 g P-1 | 0,36 g P-1 | 0,40 g P-1 |
| Antioxidans | --- | 0,18 g AO-1 | 0,18 g AO-2 |

Die nach 2-stündiger Polymerisation erhaltenen Produkte haben die in Tabelle 2 aufgeführten Eigenschaften.

**Tabelle 2**

| Beispiel | | 2 | 3 | 4 |
|---|---|---|---|---|
| Katalysatoraktivität (kg/g) | | 44 | 45,5 | 42 |
| Isotaktizität (%) | | 97,1 | 96,6 | 96,8 |
| Grenzviskosität (dl/g) | | 1,90 | 1,80 | 1,90 |
| Morphologie | | *) | *) | *) |
| Schmelzindex (g/10 min) | | 8,7 | 6,4 | 5,3 |
| Yellowness Index | | 2,5 | 4,1 | 3,7 |
| Ofenalterung | 135° (h) | 240 | 200 | 222 |
| | 150°C (h) | 70 | 30 | 48 |
| *) wie in Beispiel 1 | | | | |

### Beispiele 5-7

Es wird wie in Beispiel 2 verfahren unter Zusatz der in Tabelle 3 aufgeführten Stabilisatoren. Die Eigenschaften der erhaltenen Polymeren sind in Tabelle 4 aufgeführt.

**Tabelle 3**

| Beispiel | 5 | 6 | 7 |
|---|---|---|---|
| Piperidinderivat | 0,36 g H-1 | 0,39 g H-1 | 0,45 g H-1 |
| Phosphorverbindung | 0,36 g P-1 | 0,39 g P-2 | 0,45 g P-2 |
| Antioxidans | 0,18 g AO-3 | 0,20 g AO-3 | 0,22 g AO-4 |

**Tabelle 4**

| Beispiel | 5 | 6 | 7 |
|---|---|---|---|
| Katalysatoraktivität (kg/g) | 45,5 | 45,5 | 45,5 |
| Isotaktizität (%) | 97,2 | 96,9 | 97,1 |
| Grenzviskosität (dl/g) | 1,90 | 1,90 | 1,85 |
| Morphologie | *) | *) | *) |
| Ofenalterung Platte 150°C (Tage) | 4 | 4 | 9 |
| *) wie in Beispiel 1 | | | |

## Patentansprüche

1. Verfahren zur Herstellung von thermisch und oxidativ stabilen Olefinpolymeren durch Polymerisation an einem festen Katalysator, der durch Umsetzung eines Aluminiumalkyls mit einem festen Produkt aus einem Magnesiumdihalogenid in aktiver Form und einer Titanverbindung bereitet wurde, wobei die Polymerisation unter Zusatz mindestens einer 2,2,6,6-Tetramethylpiperidinverbindung als Stabilisator durchgeführt wird, dadurch gekennzeichnet, dass man ausserdem zur Polymerisation mindestens einen Phosphor-III-ester als Costabilisator zusetzt.

2. Verfahren gemäss Anspruch 1, dadurch gekennzeichnet, dass man als zusätzlichen Costabilisator ein Antioxidans vom Typ der sterisch gehinderten Phenole zusetzt.

3. Verfahren gemäss Anspruch 1, dadurch gekennzeichnet, dass der Katalysator mindestens einen Elektronendonator enthält.

4. Verfahren gemäss Anspruch 3, dadurch gekennzeichnet, dass der Elektronendonator ein Carbonsäureester ist.

5. Verfahren gemäss Anspruch 3, dadurch gekennzeichnet, dass der Elektronendonator eine organische Siliziumverbindung mit mindestens einer Si-O-C-Bindung ist.

6. Verfahren gemäss Anspruch 1, dadurch gekennzeichnet, dass man als Magnesiumdihalogenid Magnesiumdichlorid und als Titanverbindung Titantetrachlorid verwendet.

7. Verfahren gemäss Anspruch 1, dadurch gekennzeichnet, dass man als Stabilisator eine Verbindung verwendet, die in ihrem Molekül sowohl mindestens eine 2,2,6,6-Tetramethylpiperidingruppe als auch mindestens eine s-Triazingruppe enthält.

8. Verfahren gemäss Anspruch 7, dadurch gekennzeichnet, dass man als Stabilisator eine Verbindung der folgenden Formel verwendet

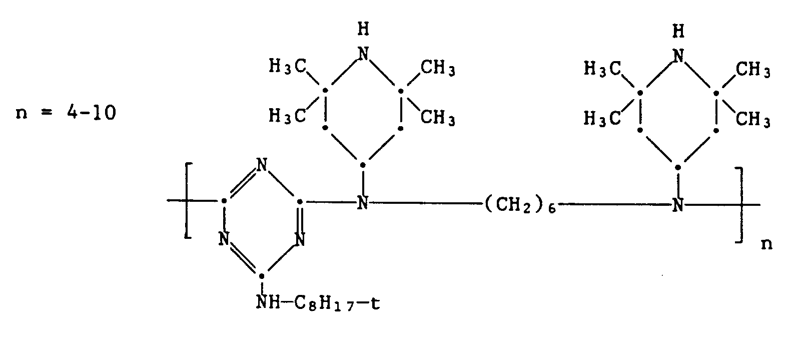

9. Verfahren gemäss Anspruch 1, dadurch gekennzeichnet, dass man als Costabilisator einen Phosphor-III-ester verwendet, der mindestens eine Gruppe P-O-Ar enthält, wobei Ar einen Mono- oder Dialkylphenylrest bedeutet.

10. Verfahren gemäss Anspruch 1, dadurch gekennzeichnet, dass man als Costabilisator Tris(2,4-di-tert.butylphenyl)-phosphit verwendet.

11. Verfahren gemäss Anspruch 1, dadurch gekennzeichnet, dass man als Costabilisator Tetrakis(2,4-di-tert.butylphenyl)-4,4'-biphenylen-di-phosphonit verwendet.

12. Verfahren gemäss Anspruch 2, dadurch gekennzeichnet, dass man als zusätzlichen Costabilisator β-(3,5-Di-tert.butyl-4-hydroxyphenyl)-propionsäure-octadecylester verwendet.

## Claims

1. A process for the preparation of olefin polymers stable to heat and oxidation by polymerization on a solid catalyst obtained by reaction of an aluminium alkyl with a solid product comprising a magnesium dihalide in active form and a titanium compound, the polymerization being carried out with the addition of at least one 2,2,6,6-tetramethylpiperidine compound as stabilizer, which comprises additionally adding to the polymerization at least one phosphorus(III) ester as co-stabilizer.

2. A process according to claim 1, which comprises adding as the additional co-stabilizer an antioxidant of the sterically hindered phenol type.

3. A process according to claim 1, wherein the catalyst comprises at least one electron donor.

4. A process according to claim 3, wherein the electron donor is a carboxylic ester.

5. A process according to claim 3, wherein the electron donor is an organic silicon compound having at least one Si-O-C bond.

6. A process according to claim 1, wherein the magnesium dihalide used is magnesium dichloride and the titanium compound used is titanium tetrachloride.

7. A process according to claim 1, wherein the stabilizer used is a compound, the molecule of which contains both at least one 2,2,6,6-tetramethylpiperidine group and at least one s-triazine group.

8. A process according to claim 7, wherein the stabilizer used is a compound of the following formula

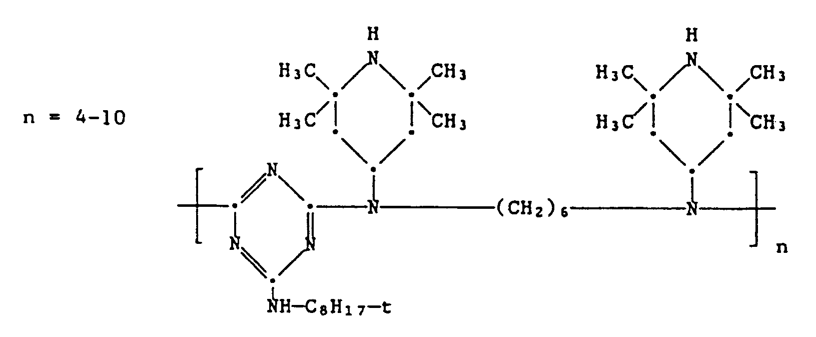

9. A process according to claim 1, wherein the co-stabilizer used is a phosphorus(III) ester which contains at least one group P-O-Ar, Ar being a monoalkylphenyl or dialkylphenyl radical.

10. A process according to claim 1, wherein the co-stabilizer used is tris(2,4-di-tert-butylphenyl) phosphite.

11. A process according to claim 1, wherein the co-stabilizer used is tetrakis(2,4-di-tert-butylphenyl) 4,4'-biphenylenediphosphonite.

12. A process according to claim 2, wherein octadecyl β-(3,5-di-tert-butyl-4-hydroxyphenyl)propionate is used as the additional co-stabilizer.

## Revendications

1. Procédé de préparation de polymères d'oléfines stables aux effets thermiques et à l'oxydation, par polymérisation sur un catalyseur solide que l'on a préparé par la réaction d'un aluminium-alkyle avec un produit solide formé d'un halogénure de magnésium sous forme active et d'un composé du titane, la polymérisation étant conduite avec addition d'au moins une 2,2,6,6-tétraméthylpipéridine comme stabilisant, procédé caractérisé en ce qu'on ajoute également à la polymérisation au moins un ester de phosphore-III comme co-stabilisant.

2. Procédé selon la revendication 1, caractérisé en ce qu'on ajoute comme co-stabilisant supplémentaire un antioxydant du type des phénols présentant un empêchement stérique.

3. Procédé selon la revendication 1, caractérisé en ce que le catalyseur contient au moins un donneur d'électrons.

4. Procédé selon la revendication 3, caractérisé en ce que le donneur d'électrons est un ester d'acide carboxylique.

5. Procédé selon la revendication 3, caractérisé en ce que le donneur d'électrons est un composé organique du siicium comprenant au moins une liaison Si-O-C.

6. Procédé selon la revendication 1, caractérisé en ce qu'on utilise comme dihalogénure de magnésium le dichlorure de magnésium, et comme composé du titane, le tétrachlorure de titane.

7. Procédé selon la revendication 1, caractérisé en ce qu'on utilise comme stabilisant un composé qui contient dans sa molécule aussi bien un groupe 2,2,6,6-tétraméthylpipéridine que, également, un groupe s-triazine.

8. Procédé selon la revendication 7, caractérisé en ce qu'on utilise comme stabilisant un composé répondant à la formule suivante :

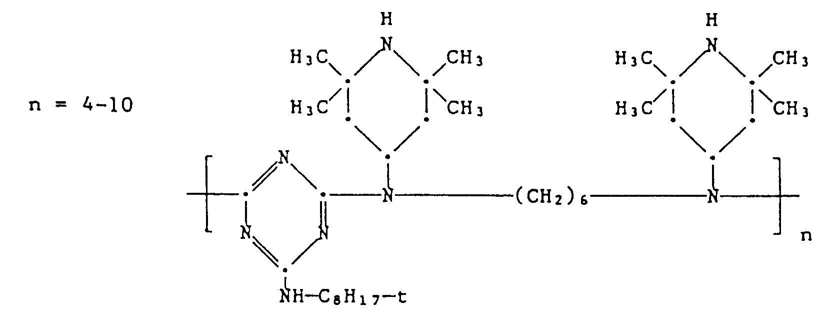

9. Procédé selon la revendication 1, caractérisé en ce qu'on utilise comme co-stabilisant un ester de phsophore-III, qui contient au moins un groupe P-O-Ar, Ar signifiant un reste mono- ou di-alkylphényle.

10. Procédé selon la revendication 1, caractérisé en ce qu'on utilise comme co-stabilisant du phosphite de tris-2,4-di-tert.-butylphényle.

11. Procédé selon la revendication 1, caractérisé en ce qu'on utilise comme co-stabilisant le 4,4'-biphénylène-diphosphonite de tétrakis (2,4-di-tert.-butylphényle).

12. Procédé selon la revendication 2, caractérisé en ce qu'on utilise comme co-stabilisant supplémentaire l'ester octadécylique de l'acide β-(3,5-di-tert.-butyl-4-hydroxyphényl)-propionique.
